# EUROPÄISCHE PATENTSCHRIFT

(11) **EP 1 114 824 B1**
(45) Veröffentlichungstag und Bekanntmachung des Hinweises auf die Patenterteilung: **12.12.2001**
(21) Anmeldenummer: 00122277.7
(22) Anmeldetag: 19.10.2000
(51) Int. Cl.: C07F 7/08

(54) **Verfahren zur Herstellung von 1,3-Dihalogen-1,1,3,3-tetra(organyl)disiloxanen**
Process for preparing 1,3-dihalo-1,1,3,3-tetraorgano disilioxanes
Procédé de préparation de 1,3-dihalo-1,1,3,3-tetraorgano disilioxanes

(30) Priorität: 23.12.1999 DE 19962563
(43) Veröffentlichungstag der Anmeldung: 11.07.2001
(73) Patentinhaber: Wacker-Chemie GmbH, 81737 München (DE)
(72) Erfinder: Winterfeld, Jörn, Dr., 84489 Burghausen (DE); Abele, Bors Cajus, Dr., 84489 Burghausen (DE)
(74) Vertreter: Budczinski, Angelika

(56) Entgegenhaltungen:
- EP-A- 0 557 762

## Beschreibung

Die Erfindung betrifft ein Verfahren zur Herstellung 1,3-Dihalogen-1,1,3,3-tetra(organyl)disiloxanen.

1,3-Dihalogen-1,1,3,3-tetra(organyl)disiloxane werden nicht nur bei der Herstellung bestimmter Polysiloxane eingesetzt, sondern finden zunehmend als Schutzgruppenreagenzien in der organischen Synthese Anwendung. Die wohl am besten untersuchten und am meisten verwendeten Disiloxane dieser Stoffklasse sind das 1,3-Dichlor-1,1,3,3-tetramethyldisiloxan und das 1,3-Dichlor-1,1,3,3-tetra-iso-propyldisiloxan.

Herstellen lassen sich diese Verbindungen prinzipiell durch Chlorierung von 1,3-Dihydro-1,1,3,3-tetra(organyl)disiloxanen. Doch sind die in der Literatur beschriebenen Chlorierungsverfahren meist ungeeignet für eine Übertragung in den industriellen Produktionsmaßstab und weisen darüber hinaus häufig noch weitere Nachteile auf.

So ist die Chlorierung zwar mit elementarem Chlor in Anwesenheit eines Katalysators z.B. gemäß JP-A-02145591 prinzipiell möglich, doch verläuft die Substitution oft nicht nur selektiv am Silicium-gebundenen Wasserstoff ab, sondern auch an den Organylresten. Eine Reinigung des Zielmoleküls ist vielfach schwierig und aufwendig.

Die Chlorierung von 1,3-Dihydro-1,1,3,3-tetramethyldisiloxan mit Kupfer(II)-chlorid in Anwesenheit von Kupfer(I)-iodid ist in EP-A-557 762 bzw. der entsprechenden US-A-5,258,535 beschrieben. Ein wesentlicher Nachteil dieses Verfahrens ist die Tatsache, dass pro H-Cl-Austausch mindestens ein (Mol-)Äquivalent Kupfer(II)-chlorid benötigt wird und speziell im großtechnischen Maßstab erhebliche Kupfersalzmengen zu handhaben sind. Darüber hinaus wird für die Umsetzung ein Lösungsmittel benötigt.

Desweiteren ist die Verwendung von Allylchloriden aus DE-A-351 8605, von Chlorkohlenstoffen aus JP-A-58004792, von Säurechloriden aus H.X. Zang, et al., Synth. Commun. 17 (1987) 1299-1307 sowie von Hypochloriten aus R. Chawla, et al., Synth. Commun. 29 (1999) 3499-3501 meist in Anwesenheit eines bestimmten Katalysators für die Chlorierung von 1,3-Dihydro-1,1,3,3-tetra(organyl)disiloxanen bekannt. Aufgrund der toxikologischen Eigenschaften dieser Chlorierungsmittel ist der industrielle Einsatz jedoch fraglich. Darüber hinaus fallen bei diesen Chlorierungsreaktionen Nebenprodukte an, die destillativ von dem gewünschten Produkt abgetrennt werden müssen.

Aufgabe der Erfindung ist es, ein einfaches sowie insbesondere wirtschaftliches Verfahren zur Herstellung von 1,3-Dihalogen-1,1,3,3-tetra(organyl)disiloxanen zur Verfügung zu stellen.

Gegenstand der Erfindung ist ein Verfahren zur Herstellung von 1,3-Dihalogen-1,1,3,3-tetra(organyl)disiloxanen der allgemeinen Formel

XR₂Si-O-SiR₂X (1)

durch Reaktion von Halogenwasserstoff mit den 1,3-Dihydro-1,1,3,3-tetra(organyl)disiloxanen der allgemeinen Formel

HR₂Si-O-SiR₂H (2),

wobei
**R** gleich oder verschieden sein kann und gegebenenfalls mit Fluor- oder Chloratome substituierte Kohlenwasserstoffreste mit 1 bis 20 Kohlenstoffatomen bedeutet und
**X** gleich oder verschieden sein kann und Halogenatom bedeutet,
in Anwesenheit eines Katalysators, ausgewählt aus Übergangsmetallen der 8. Nebengruppe, Verbindungen von Übergangsmetallen der 8. Nebengruppe und Komplexen von Übergangsmetallen der 8. Nebengruppe.

Beispiele für Kohlenwasserstoffreste **R** sind Alkylreste, wie der Methyl-, Ethyl-, n-Propyl-, iso-Propyl-, n-Butyl-, sec.-Butyl-, tert.-Butyl-, Thexyl-, n-Hexyl-, n-Heptyl- und n-Octylrest sowie Octadecylreste; Cycloalkylreste, wie der Cyclopentylrest, Cyclohexylrest und Methylcyclohexylreste; Aralkylreste, wie der Benzylrest, Phenylethylreste, Phenylnonylreste, 2-Phenylpropylreste und Fluorenylreste.

Beispiele für substituierte Kohlenwasserstoffreste **R** sind der 3,3,3-Trifluorpropyl-, der 3,3,4,4,5,5,6,6,6-Nonafluorhexyl- und der 2,3,4,5,6-Pentafluorphenylrest sowie der Chlormethyl- und der 3-Chlorpropylrest.

Bevorzugte Reste **R** sind Alkyl- und Cycloalkylreste mit 1 bis 10 Kohlenstoffatomen, wobei der Metyl-, Ethyl-, iso-Propyl-, tert.-Butyl-, Cyclopentyl- und Cyclohexylrest besonders bevorzugt sind.

Bevorzugt handelt es sich bei **X** um das Fluor-, Chlor- oder Bromatom, wobei das Chloratom besonders bevorzugt ist.

Es gilt in allen Formeln die Vierwertigkeit des Siliciumatoms.

Bei den nach dem erfindungsgemäßen Verfahren hergestellten 1,3-Dihalogen-1,1,3,3-tetra(organyl)disiloxanen der allgemeinen Formel (1) kann es sich ebenso wie bei den erfindungsgemäß eingesetzten 1,3-Dihydro-1,1,3,3-tetra(organyl)disiloxanen der allgemeinen Formel (2) um bei Raumtemperatur und 1013 hPa flüssige oder feste Organosiliciumverbindungen handeln.

Bevorzugte Beispiele für die nach dem erfindungsgemäßen Verfahren hergestellten Disiloxane der allgemeinen Formel (1) sind 1,3-Dichlor-1,1,3,3-tetramethyldisiloxan,
1,3-Dichlor-1,1,3,3-tetraethyldisiloxan,
1,3-Dichlor-1,1,3,3-tetra-n-propyldisiloxan,
1,3-Dichlor-1,1,3,3-tetra-iso-propyldisiloxan,
1,3-Dichlor-1,1,3,3-tetra-n-butyldisiloxan,
1,3-Dichlor-1,1,3,3-tetra-iso-butyldisiloxan,
1,3-Dichlor-1,1,3,3-tetra-sec-butyldisiloxan,
1,3-Dichlor-1,1,3,3-tetra-tert-butyldisiloxan,
1,3-Dichlor-1,1,3,3-tetracyclopentyldisiloxan,
1,3-Dichlor-1,1,3,3-tetracyclohexyldisiloxan,
1,3-Dichlor-1,3-diethyl-1,3-dimethyldisiloxan,
1,3-Dichlor-1,3-dimethyl-1,3-di-n-propyldisiloxan,
1,3-Dichlor-1,3-dimethyl-1,3-di-iso-propyldisiloxan,
1,3-Dichlor-1,3-di-n-butyl-1,3-dimethyldisiloxan,
1,3-Dichlor-1,3-di-iso-butyl-1,3-dimethyldisiloxan,
1,3-Dichlor-1,3-di-sec-butyl-1,3-dimethyldisiloxan,
1,3-Dichlor-1,3-di-tert-butyl-1,3-dimethyldisiloxan,
1,3-Dichlor-1,3-dicyclopentyl-1,3-dimethyldisiloxan,
1,3-Dichlor-1,3-dicyclohexyl-1,3-dimethyldisiloxan,
1,3-Dichlor-1,3-diethyl-1,3-di-n-propyldisiloxan,
1,3-Dichlor-1,3-diethyl-1,3-di-iso-propyldisiloxan,
1,3-Dichlor-1,3-di-n-butyl-1,3-diethyldisiloxan,
1,3-Dichlor-1,3-di-iso-butyl-1,3-diethyldisiloxan,
1,3-Dichlor-1,3-di-sec-butyl-1,3-diethyldisiloxan,
1,3-Dichlor-1,3-di-tert-butyl-1,3-diethyldisiloxan,
1,3-Dichlor-1,3-dicyclopentyl-1,3-diethyldisiloxan und
1,3-Dichlor-1,3-dicyclohexyl-1,3-diethyldisiloxan,
   wobei
1,3-Dichlor-1,1,3,3-tetramethyldisiloxan,
1,3-Dichlor-1,1,3,3-tetra-iso-propyldisiloxan,
1,3-Dichlor-1,1,3,3-tetra-n-butyldisiloxan,
1,3-Dichlor-1,1,3,3-tetra-sec-butyldisiloxan,
1,3-Dichlor-1,1,3,3-tetra-tert-butyldisiloxan,
1,3-Dichlor-1,1,3,3-tetracyclohexyldisiloxan,
1,3-Dichlor-1,3-dimethyl-1,3-di-iso-propyldisiloxan,
1,3-Dichlor-1,3-di-n-butyl-1,3-dimethyldisiloxan,
1,3-Dichlor-1,3-di-sec-butyl-1,3-dimethyldisiloxan,
1,3-Dichlor-1,3-di-tert-butyl-1,3-dimethyldisiloxan und
1,3-Dichlor-1,3-dicyclohexyl-1,3-dimethyldisiloxan
besonders bevorzugt sind.

Bei den im erfindungsgemäßen Verfahren eingesetzten Disiloxanen der allgemeinen Formel (2) handelt es sich bevorzugt um
1,3-Dihydro-1,1,3,3-tetramethyldisiloxan,
1,3-Dihydro-1,1,3,3-tetraethyldisiloxan,
1,3-Dihydro-1,1,3,3-tetra-n-propyldisiloxan,
1,3-Dihydro-1,1,3,3-tetra-iso-propyldisiloxan,
1,3-Dihydro-1,1,3,3-tetra-n-butyldisiloxan,
1,3-Dihydro-1,1,3,3-tetra-iso-butyldisiloxan,
1,3-Dihydro-1,1,3,3-tetra-sec-butyldisiloxan,
1,3-Dihydro-1,1,3,3-tetra-tert-butyldisiloxan,
1,3-Dihydro-1,1,3,3-tetracyclopentyldisiloxan,
1,3-Dihydro-1,1,3,3-tetracyclohexyldisiloxan,
1,3-Dihydro-1,3-diethyl-1,3-dimethyldisiloxan,
1,3-Dihydro-1,3-dimethyl-1,3-di-n-propyldisiloxan,
1,3-Dihydro-1,3-dimethyl-1,3-di-iso-propyldisiloxan,
1,3-Dihydro-1,3-di-n-butyl-1,3-dimethyldisiloxan,
1,3-Dihydro-1,3-di-iso-butyl-1,3-dimethyldisiloxan,
1,3-Dihydro-1,3-di-sec-butyl-1,3-dimethyldisiloxan,
1,3-Dihydro-1,3-di-tert-butyl-1,3-dimethyldisiloxan,
1,3-Dihydro-1,3-dicyclopentyl-1,3-dimethyldisiloxan,
1,3-Dihydro-1,3-dicyclohexyl-1,3-dimethyldisiloxan,
1,3-Dihydro-1,3-diethyl-1,3-di-n-propyldisiloxan,
1,3-Dihydro-1,3-diethyl-1,3-di-iso-propyldisiloxan,
1,3-Dihydro-1,3-di-n-butyl-1,3-diethyldisiloxan,
1,3-Dihydro-1,3-di-iso-butyl-1,3-diethyldisiloxan,
1,3-Dihydro-1,3-di-sec-butyl-1,3-diethyldisiloxan,
1,3-Dihydro-1,3-di-tert-butyl-1,3-diethyldisiloxan,
1,3-Dihydro-1,3-dicyclopentyl-1,3-diethyldisiloxan und
1,3-Dihydro-1,3-dicyclohexyl-1,3-diethyldisiloxan,
   wobei
1,3-Dihydro-1,1,3,3-tetramethyldisiloxan,
1,3-Dihydro-1,1,3,3-tetra-iso-propyldisiloxan,
1,3-Dihydro-1,1,3,3-tetra-n-butyldisiloxan,
1,3-Dihydro-1,1,3,3-tetra-sec-butyldisiloxan,
1,3-Dihydro-1,1,3,3-tetra-tert-butyldisiloxan,
1,3-Dihydro-1,1,3,3-tetracyclohexyldisiloxan,
1,3-Dihydro-1,3-dimethyl-1,3-di-iso-propyldisiloxan,
1,3-Dihydro-1,3-di-n-butyl-1,3-dimethyldisiloxan,
1,3-Dihydro-1,3-di-sec-butyl-1,3-dimethyldisiloxan,
1,3-Dihydro-1,3-di-tert-butyl-1,3-dimethyldisiloxan und
1,3-Dihydro-1,3-dicyclohexyl-1,3-dimethyldisiloxan
besonders bevorzugt sind.

Die erfindungsgemäß eingesetzten Disiloxane der allgemeinen Formel (2) sind handelsübliche Produkte bzw. können nach in der Chemie bekannten Verfahren hergestellt werden.

Beispielsweise sind sie durch Hydrolyse von Halogendi(organyl)-H-silanen zugänglich. Halogendi(organyl)-H-silane sind ebenfalls handelsübliche Produkte bzw. fallen beispielsweise bei der Direktsynthese von Silicium mit Halogenorganylen (Müller-Rochow-Prozess) an, lassen sich durch Salzeliminierungsreaktionen von Metallorganylen (z.B. Grignardreagenzien oder Lithiumorganylen) mit Dihalogen(organyl)silanen bzw. Trihalogen-H-silanen sowie durch Dis- und Komproportionierungsreaktionen erhalten.

Die im erfindungsgemäßen Verfahren bevorzugt eingesetzten Halogenwasserstoffe sind Fluor-, Chlor- und Bromwasserstoff, wobei Chlorwasserstoff besonders bevorzugt ist.

Die nach dem erfindungsgemäßen Verfahren eingesetzten Katalysatoren sind Übergangsmetalle der 8. Nebengruppe sowie Verbindungen oder Komplexe dieser Metalle. Bevorzugte Beispiele sind Ruthenium, Rhodium, Iridium, Palladium und Platin in Pulverform, gegebenenfalls im Gemisch mit Kohle, Aktivkohle oder Bariumsulfat sowie Dichlortetrakis(triphenylphosphino)-ruthenium(II), Dichlortris(triphenylphosphino)ruthenium(II), Kaliumhexachlorruthenat(IV), Kalium-µ-oxobis-[pentachlor-ruthenat(IV)]-Hydrat, Ruthenium(III)-acetylacetonat, Ruthenium(III)-chlorid, Ruthenium(III)-chlorid-Hydrat, Ruthenium(IV)-oxid, Ruthenium(IV)-oxid- Hydrat, Chlortris(triphenylphosphino)rhodium(I), Kaliumhexachlorrhodat(III), Natriumhexachlorrhodat(III), Rhodium(III)-acetylacetonat, Rhodium(III)-chlorid, Rhodium(III) -chlorid-Hydrat, Rhodium(III)-oxid, Rhodium(III)-oxid-Hydrat, Hexachloriridium(IV)-säure-Hydrat, Iridium(III)-acetylacetonat, Iridium(III)-chlorid, Iridium(III)-chlorid-Hydrat, Iridium(IV)-oxid, Iridium(IV)-oxid-Hydrat, Kaliumhexachloriridat(III), Kaliumhexachloriridat(IV), Natriumhexachloriridat(III)-Hydrat, Natriumhexachloriridat(IV)-Hexahydrat, Bis(aceto)bis(triphenylphosphino)palladium(II), Kaliumhexachlorpalladat(IV), Kaliumtetrachlorpalladat(II), Natriumhexachlorpalladat(IV) Tetrahydrat, Natriumtetrachlorpalladat(II), Palladium(II)-acetat, Palladium(II)-acetylacetonat, Palladium(II)-chlorid, Palladium(II)-oxid, Palladium(II)-oxid-Hydrat, Palladium(II)sulfat, Tetrakis(triphenylphosphino)palladium(0), Hexachlorplatin(IV)-säure- Hydrat, Platin(II)-acetylacetonat, Platin(II)-chlorid, Platin(IV)-chlorid, Platin(0)-1,3-divinyl-1,1,3,3-tetramethyldisiloxan, Platin(IV)-oxid, Kaliumhexachlorplatinat(IV), Natriumhexachlorplatinat(IV)-Hexahydrat und Tetrakis(triphenylphosphino)platin(0) sowie Kombinationen aus diesen Verbindungen.

Besonders bevorzugt handelt es sich bei dem im erfindungsgemäßen Verfahren eingesetzten Katalysator um Ruthenium auf Kohle (z.B. 5 % Ru), Rhodium auf Kohle (z.B. 5 % Rh), Iridiumpulver, Palladium auf Aktivkohle (z.B. 5 % Pd) und Platin auf Aktivkohle (z.B. 5 % Pt) sowie Dichlortris(triphenylphosphino)ruthenium(II), Kaliumhexachlorruthenat(IV), Ruthenium(III)-chlorid, Ruthenium(IV)-oxid, Rhodium(III)-chlorid, Hexachloriridium(IV) (IV)-säure-Hydrat, Iridium(III)-chlorid, Iridium(IV)-oxid, Kaliumhexachloriridat(III), Kaliumhexachloriridat(IV), Bis(aceto)bis(triphenylphosphino)palladium(II), Kaliumhexachlorpalladat(IV), Kaliumtetrachlorpalladat(II), Natriumhexachlorpalladat(IV)-Tetrahydrat, Natriumtetrachlorpalladat(II), Palladium(II)-chlorid, Palladium(II)-oxid, Hexachlorplatin(IV)-säure-Hydrat, Platin(II)-chlorid, Platin(IV)-chlorid, Platin(0)-1,3-divinyl-1,1,3,3-tetramethyldisiloxan und Platin(IV)-oxid, Kaliumhexachlorplatinat(IV), insbesondere um Palladium auf Aktivkohle (z.B. 5 % Pd), Platin auf Aktivkohle (z.B. 5 % Pt), Palladium(II)-chlorid, Hexachlorplatin(IV)-säure-Hydrat und Platin(0)-1,3-divinyl-1,1,3,3-tetramethyldisiloxan.

Unter Berücksichtigung einer geeigneten Raum-Zeit-Ausbeute aber auch unter ökonomischer und ökologischer Aspekte wird im erfindungsgemäßen Verfahren der Übergangsmetallkatalysator bevorzugt in einer Menge von 0,02 bis 100000 Gew.-ppm, besonders bevorzugt in einer Menge von 1 bis 10000 Gew.-ppm, jeweils berechnet als elementares Metall der 8. Nebengruppe und bezogen auf die Gesamtmenge an eingesetztem Disiloxan der allgemeinen Formel (2), zugegeben.

Bei dem erfindungsgemäßen Verfahren wird die Umsetzung bei einer Temperatur von bevorzugt -78 bis 250°C, besonders bevorzugt bei 0 bis 150°C, durchgeführt. Der bei der erfindungsgemäßen Umsetzung angewendete Druck kann beliebig sein und hängt insbesondere von den eingesetzten Disiloxanen der Formel (2) ab. Bevorzugt erfolgt die Umsetzung von Halogenwasserstoff mit den Dihydrodisiloxanen der allgemeinen Formel (2) bei einem Druck von bevorzugt 500 bis 20000 hPa, besonders bevorzugt bei dem Druck der umgebenden Atmosphäre, also bei 900 bis 1100 hPa, wobei die eingesetzten Dihydrodisiloxane vorzugsweise bei Raumtemperatur und dem gewählten Druck flüssig oder fest sind.

Das erfindungsgemäße Verfahren wird bevorzugt in einer Schutzgasatmosphäre unter Ausschluss von Luftsauerstoff und Feuchtigkeit durchgeführt. Geeignete Schutzgase sind beispielsweise Argon und Stickstoff.

Entsteht nach dem erfindungsgemäßen Herstellverfahren ein festes 1,3-Dihalogen-1,1,3,3-tetra(organyl)disiloxan oder wird ein festes 1,3-Dihydro-1,1,3,3-tetra(organyl)disiloxan eingesetzt, so wird die Reaktion bevorzugt in einem organischen Lösungsmittel durchgeführt.

Falls ein organisches Lösungsmittel eingesetzt werden soll, wird dieses in einer Menge von bevorzugt 0,01 bis 50 (Gewichts-)Äquivalenten, besonders bevorzugt in einer Menge von 1 bis 5 (Gewichts-)Äquivalenten, jeweils bezogen auf das eingesetzte 1,3-Dihydro-1,1,3,3-tetra(organyl)disiloxan, zugegeben.

Geeignete Lösungsmittel, die im erfindungsgemäßen Verfahren eingesetzt werden, sind aromatische Kohlenwasserstoffe, wie Benzol, Toluol oder Xylol, aliphatische Kohlenwasserstoffe, wie n-Pentan, n-Hexan, n-Heptan, n-Octan oder Cyclohexan sowie halogenierte Kohlenwasserstoffe. Lösungsmittel, welche die Aktivität des Katalysators herabsetzen oder zu Nebenreaktionen führen, wie Alkohole, sind hingegen für die erfindungsgemäße Halogenierungsreaktion eher ungeeignet.

Bei der erfindungsgemäßen Herstellung von flüssigen 1,3-Dihalogen-1,1,3,3-tetra(organyl)disiloxan ausgehend von flüssigen 1,3-Dihydro-1,1,3,3-tetra(organyl)disiloxan ist ein geeignetes, gegenüber den eingesetzten Komponenten inertes Lösungsmittel nicht notwendig, aber auch nicht störend.

Bei dem erfindungsgemäßen Verfahren wird gasförmiger Halogenwasserstoff bevorzugt in einem molaren Verhältnis von 2:1 bis 100:1, besonders bevorzugt im Verhältnis von 2:1 bis 40:1, mit dem Disiloxan der allgemeinen Formel (2) umgesetzt.

Nach Beendigung der erfindungsgemäßen Umsetzung kann das Disiloxan der allgemeinen Formel (1) nach an sich bekannter Weise, wie etwa direkt durch Filtration oder zur Abtrennung eines im Reaktionsgemisch gelösten Katalysators auch mit anschließender Destillation, aus der Reaktionsmischung isoliert werden.

Das erfindungsgemäße Verfahren hat den Vorteil, dass es die Herstellung von Dihalogendisiloxanen der allgemeinen Formel (1) in einfacher Weise und in sehr guten Ausbeuten ermöglicht.

Das erfindungsgemäße Verfahren hat den weiteren Vorteil, dass die Dihalogendisiloxane mit einer sehr hohen Produktreinheit entstehen. Der als Nebenprodukt anfallende Wasserstoff ist leicht und quantitativ abtrennbar.

Ferner hat das erfindungsgemäße Verfahren den Vorteil, dass die Reaktionszeiten sehr kurz sind und toxikologische Aspekte sowie sicherheitstechnische Gesichtspunkte bei der Auswahl des Katalysators berücksichtigt werden können.

Weiter ist es vorteilhaft, dass sich ein Teil der beanspruchten Katalysatoren, beispielsweise die Metallpulver rein oder als Gemisch mit Kohle bzw. Aktivkohle durch bekannte Maßnahmen, wie Filtration, Abdekantieren oder Abzentrifugieren der überstehenden Flüssigkeit, einfach abtrennen und ohne erkennbaren Aktivitätsverlust wieder als Katalysatoren für weitere Chlorierungsreaktionen einsetzen lassen.

Die erfindungsgemäß hergestellten Disiloxane der allgemeinen Formel (1) können für alle Zwecke eingesetzt werden, für die auch bisher 1,3-Dihalogen-1,1,3,3-tetra(organyl)disiloxane verwendet wurden. Sie finden insbesondere als Derivatisierungs- und Schutzgruppen-Reagenzien in der organischen Synthese zur Herstellung pharmazeutischer Produkte, von Agrochemikalien sowie für analytische Zwecke Anwendung.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt.

Sofern nicht anders angegeben, erfolgt die Handhabung sowohl der Einsatzstoffe als auch der Reaktionsprodukte in den nachfolgend beschriebenen Beispielen in einer Schutzgasatmosphäre von Argon unter Ausschluss von Luft und Feuchtigkeit.

### Beispiel 1

In einem 250 ml-Dreihalskolben ausgestattet mit Rührfisch, Schliffthermometer, Intensivkühler und Gaseinleitungsrohr werden 0,3 g (1,4 · 10⁻⁴ mol Pd) Palladium auf Aktivkohle (5 % Pd) und 61,6 g (0,25 mol) 1,3-Dihydro-1,1,3,3-tetraisopropyldisiloxan (99,1 % Reinheit, gaschromatographisch ermittelt) vorgelegt. Anschließend wird diese Reaktionsmischung auf 45°C erwärmt und es wird über einen Zeitraum von 120 Minuten eine Menge von ca. 36,5 g (1,0 mol) Chlorwasserstoffgas durchgeleitet. Zur Abtrennung des Katalysators lässt man die Suspension auf Raumtemperatur abkühlen und filtriert dann. Das klare, farblose Filtrat enthält das 1,3-Dichlor-1,1,3,3-tetraiso-propyldisiloxan in einer Reinheit von 99,5 % (gaschromatographisch ermittelt). Die Filtratmenge beträgt 75,5 g (96 % Ausbeute bezogen auf 1,3-Dihydro-1,1,3,3-tetra-isopropyldisiloxan).

### Beispiel 2

Die in Beispiel 1 beschriebene Verfahrensweise wird mit der Abänderung wiederholt, dass anstelle von 0,3 g Palladium auf Aktivkohle (5 % Pd) 0,4 g (1,0 · 10⁻⁴ mol Pt) Platin auf Aktivkohle (5 % Pt) eingesetzt werden. Der Katalysator wird ebenfalls nach Beendigung der Chlorwasserstoff-Einleitung durch Filtration abgetrennt. Das klare, farblose Filtrat enthält das 1,3-Dichlor-1,1,3,3-tetra-iso-propyldisiloxan in einer Reinheit von 99,2 % (gaschromatographisch ermittelt). Die Filtratmenge beträgt 74,9 g (95 % Ausbeute bezogen auf 1,3-Dihydro-1,1,3,3-tetra-iso-propyldisiloxan).

### Beispiel 3

Die in Beispiel 1 beschriebene Verfahrensweise wird mit der Abänderung wiederholt, dass anstelle von 0,3 g Palladium auf Aktivkohle (5 % Pd) 0,02 g (1,1 · 10⁻⁴ mol) Palladium(II)-chlorid eingesetzt werden. Die Produktisolierung erfolgt durch Vakuumdestillation. Bei 94-95°C/1 hPa werden 70,1 g 1,3-Dichlor-1,1,3,3-tetra-iso-propyldisiloxan (89 % Ausbeute bezogen auf 1,3-Dihydro-1,1,3,3-tetra-iso-propyldisiloxan) erhalten.

### Beispiel 4

Die in Beispiel 1 beschriebene Verfahrensweise wird mit der Abänderung wiederholt, dass anstelle von 0,3 g Palladium auf Aktivkohle (5 % Pd) 0,1 g (2,0 · 10⁻⁴ mol Pt) Hexachloroplatin(IV)-säure Hydrat (40 % Pt) eingesetzt werden. Die Produktisolierung erfolgt ebenfalls durch Vakuumdestillation. Es werden 71,2 g 1,3-Dichlor-1,1,3,3-tetra-iso-propyldisiloxan (90 % Ausbeute bezogen auf 1,3-Dihydro-1,1,3,3-tetra-iso-propyldisiloxan) erhalten.

### Beispiel 5

Die in Beispiel 1 beschriebene Verfahrensweise wird mit der Abänderung wiederholt, dass anstelle von 0,3 g Palladium auf Aktivkohle (5% Pd) 1,0 ml (1,0 · 10⁻⁴ mol) Platin(0)-1,3-divinyl-1,1,3,3-tetramethyldisiloxan Komplex (0,1 m in Polydimethyldisiloxan mit einer Viskosität von 100 mPa s) eingesetzt werden. Die Produktisolierung erfolgt durch Vakuumdestillation. Es werden 72,0 g 1,3-Dichlor-1,1,3,3-tetra-iso-propyldisiloxan (91 % Ausbeute bezogen auf 1,3-Dihydro-1,1,3,3-tetra-iso-propyldisiloxan) erhalten.

### Beispiel 6

Die in Beispiel 1 beschriebene Verfahrensweise wird mit der Abänderung wiederholt, dass anstelle von 0,3 g Palladium auf Aktivkohle (5% Pd) 0,05 g (1,7 · 10⁻⁴ mol) Iridium(III)chlorid eingesetzt werden. Die Produktisolierung erfolgt durch Vakuumdestillation. Es werden 71,5 g 1,3-Dichlor-1,1,3,3-tetra-iso-propyldisiloxan (91 % Ausbeute bezogen auf 1,3-Dihydro-1,1,3,3-tetra-iso-propyldisiloxan) erhalten.

### Beispiel 7

In einer Apparatur gemäß Beispiel 1 werden 0,3 g (1,4 · 10⁻⁴ mol Pd) Palladium auf Aktivkohle (5% Pd) und 33,6 g (0,25 mol) 1,3-Dihydro-1,1,3,3-tetramethyldisiloxan (99,4 % Reinheit, gaschromatographisch ermittelt) bei 30°C vorgelegt. Über einen Zeitraum von 100 Minuten werden ca. 36,5 g (1,0 mol) Chlorwasserstoffgas durch die Reaktionsmischung geleitet. Der Katalysator wird nach Beendigung der Chlorwasserstoff-Einleitung durch Filtration abgetrennt. Das klare, farblose Filtrat enthält das 1,3-Dichlor-1,1,3,3-tetramethyldisiloxan in einer Reinheit von 99,5 % (gaschromatographisch ermittelt). Die Filtratmenge beträgt 49,1 g (97 % Ausbeute bezogen auf 1,3-Dihydro-1,1,3,3-tetramethyldisiloxan).

### Beispiel 8

Die in Beispiel 7 beschriebene Verfahrensweise wird mit der Abänderung wiederholt, dass anstelle von 0,3 g Palladium auf Aktivkohle (5% Pd) 0,02 g (1,1 · 10⁻⁴ mol) Palladium(II)-chlorid eingesetzt werden. Die Produktisolierung erfolgt durch Destillation. Es werden 46,3 g 1,3-Dichlor-1,1,3,3-tetramethyldisiloxan (91 % Ausbeute bezogen auf 1,3-Dihydro-1,1,3,3-tetramethyldisiloxan) erhalten.

### Beispiel 9

Die in Beispiel 7 beschriebene Verfahrensweise wird mit der Abänderung wiederholt, dass anstelle von 33,6 g 1,3-Dihydro-1,1,3,3-tetramethyldisiloxan 47,6 g (0,25 mol) 1,3-Dihydro-1,1,3,3-tetraethyldisiloxan eingesetzt werden. Der Katalysator wird nach Beendigung der Chlorwasserstoff-Einleitung ebenfalls durch Filtration abgetrennt. Das klare, farblose Filtrat enthält das 1,3-Dichlor-1,1,3,3-tetraethyldisiloxan in einer Reinheit von 99,6 % (gaschromatographisch ermittelt). Die Filtratmenge beträgt 63,4 g (98 % Ausbeute bezogen auf 1,3-Dihydro-1,1,3,3-tetraethyldisiloxan).

### Beispiel 10

Die in Beispiel 7 beschriebene Verfahrensweise wird mit der Abänderung wiederholt, dass anstelle von 33,6 g 1,3-Dihydro-1,1,3,3-tetramethyldisiloxan 54,6 g (0,25 mol) 1,3-Dihydro-1,3-di-tert-butyl-1,3-dimethyldisiloxan eingesetzt werden. Der Katalysator wird nach Beendigung der Chlorwasserstoff-Einleitung ebenfalls durch Filtration abgetrennt. Das klare, farblose Filtrat enthält das 1,3-Dichlor-1,3-di-tert-butyl-1,3-dimethyldisiloxan in einer Reinheit von 99,1 % (gaschromatographisch ermittelt). Die Filtratmenge beträgt 69,9 g (97 % Ausbeute bezogen auf 1,3-Dihydro-1,3-di-tert-butyl-1,3-dimethyldisiloxan).

## Patentansprüche

1. Verfahren zur Herstellung von 1,3-Dihalogen-1,1,3,3-tetra(organyl)disiloxanen der allgemeinen Formel
XR₂Si-O-SiR₂X (1)
durch Reaktion von Halogenwasserstoff mit den 1,3-Dihydro-1,1,3,3-tetra(organyl)disiloxanen der allgemeinen Formel
HR₂Si-O-SiR₂H (2),
wobei
**R** gleich oder verschieden sein kann und gegebenenfalls mit Fluor- oder Chloratome substituierte Kohlenwasserstoffreste mit 1 bis 20 Kohlenstoffatomen bedeutet und
**X** gleich oder verschieden sein kann und Halogenatom bedeutet,
in Anwesenheit eines Katalysators, ausgewählt aus Übergangsmetallen der 8. Nebengruppe, Verbindungen von Übergangsmetallen der 8. Nebengruppe und Komplexen von Übergangsmetallen der 8. Nebengruppe.

2. Verfahren nach Anspruch 1, **dadurch gekennzeichnet, dass** es sich bei Rest X um das Chloratom handelt.

3. Verfahren nach Anspruch 1 oder 2, **dadurch gekennzeichnet, dass** es sich bei den eingesetzten 1,3-Dihydro-1,1,3,3-tetra(organyl)disiloxanen der allgemeinen Formel (2) um bei Raumtemperatur und 1013 hPa flüssige oder feste Organosiliciumverbindungen handeln.

4. Verfahren nach einem oder mehreren der Ansprüche 1 bis 3, **dadurch gekennzeichnet, dass** es sich bei den eingesetzten Halogenwasserstoffen um Chlorwasserstoff handelt.

5. Verfahren nach einem oder mehreren der Ansprüche 1 bis 4, **dadurch gekennzeichnet, dass** der Übergangsmetallkatalysator in einer Menge von 0,02 bis 100000 Gew.-ppm, berechnet als elementares Metall der 8. Nebengruppe bezogen auf die Gesamtmenge an eingesetztem Disiloxan der allgemeinen Formel (2), zugegeben wird.

6. Verfahren nach einem oder mehreren der Ansprüche 1 bis 5, **dadurch gekennzeichnet, dass** Halogenwasserstoff in einem molaren Verhältnis von 2:1 bis 100:1 mit dem Disiloxan der allgemeinen Formel (2) umgesetzt wird.

7. Verfahren nach einem oder mehreren der Ansprüche 1 bis 6, **dadurch gekennzeichnet, dass** es sich bei dem eingesetzten Katalysator um Palladium auf Aktivkohle, Platin auf Aktivkohle, Palladium(II)-chlorid, Hexachlorplatin(IV)-säure-Hydrat und Platin(0)-1,3-divinyl-1,1,3,3-tetramethyldisiloxan handelt.

## Claims

1. A process for the preparation of 1,3-dihalo-1,1,3,3-tetra(organyl)disiloxanes of the general formula
XR₂Si-O-SiR₂X (1)
by reacting hydrogen halide with the 1,3-dihydro-1,1,3,3-tetra(organyl)disiloxanes of the general formula
HR₂Si-O-SiR₂H (2),
in which
**R** may be identical or different and optionally denotes hydrocarbon radicals substituted by fluorine or chlorine atoms and having 1 to 20 carbon atoms and
**X** may be identical or different and denotes a halogen atom,
in the presence of a catalyst selected from transition metals of the 8th subgroup, compounds of transition metals of the 8th subgroup and complexes of transition metals of the 8th subgroup.

2. The process as claimed in claim 1, wherein radical X is the chlorine atom.

3. The process as claimed in claim 1 or 2, wherein the 1,3-dihydro-1,1,3,3-tetra(organyl)-disiloxanes of the general formula (2) which are used are organosilicon compounds which are liquid or solid at room temperature and 1013 hPa.

4. The process as claimed in one or more of claims 1 to 3, wherein the hydrogen halide used is hydrogen chloride.

5. The process as claimed in one or more of claims 1 to 4, wherein the transition metal catalyst is added in an amount of from 0.02 to 100,000 ppm by weight, calculated as elemental metal of the 8th subgroup and based on the total amount of disiloxane of the general formula (2) used.

6. The process as claimed in one or more of claims 1 to 5, wherein hydrogen halide is reacted in a molar ratio of from 2:1 to 100:1 with the disiloxane of the general formula (2).

7. The process as claimed in one or more of claims 1 to 6, wherein the catalyst used is palladium on active carbon, platinum on active carbon, palladium(II) chloride, hexachloroplatinic(IV) acid hydrate and platinum(0)-1,3-divinyl-1,1,3,3-tetramethyldisiloxane.

## Revendications

1. Procédé pour la préparation de 1,3-dihalogéno-1,1,3,3-tétra(organyl)disiloxanes de formule générale
XR₂Si-O-SiR₂X (1)
par la réaction d'un halogénure d'hydrogène avec les 1,3-dihydro-1,1,3,3-tétra-(organyl)disiloxanes de formule générale
HR₂Si-O-SiR₂H (2)
dans laquelle
les radicaux R peuvent être identiques ou différents et représentent des radicaux hydrocarbonés ayant de 1 à 20 atomes de carbone, éventuellement substitués par des atomes de fluor ou de chlore, et
les symboles X peuvent être identiques ou différents et représentent des atomes d'halogène,
en présence d'un catalyseur choisi parmi les métaux de transition du groupe 8B, des composés des métaux de transition du groupe 8B et des complexes des métaux de transition du groupe 8B.

2. Procédé selon la revendication 1, **caractérisé en ce que** le symbole X représente l'atome de chlore.

3. Procédé selon la revendication 1 ou 2, **caractérisé en ce que** les 1,3-dihydro-1,1,3,3-tétra(organyl)disiloxanes de formule générale (2) utilisés consistent en des composés organosiliciques solides ou liquides à la température ambiante et sous 1 013 hPa.

4. Procédé selon une ou plusieurs des revendications 1 à 3, **caractérisé en ce que** les halogénures d'hydrogène utilisés consistent en le chlorure d'hydrogène.

5. Procédé selon une ou plusieurs des revendications 1 à 4, **caractérisé en ce que** le catalyseur à base d'un métal de transition est ajouté en une quantité de 0,02 à 100 000 ppm en poids, calculé en tant que métal élémentaire du groupe 8B et par rapport à la quantité totale de disiloxane utilisé de formule générale (2).

6. Procédé selon une ou plusieurs des revendications 1 à 5, **caractérisé en ce que** l'halogénure d'hydrogène est utilisé avec le disiloxane de formule générale (2) en un rapport molaire allant de 2:1 à 100:1.

7. Procédé selon une ou plusieurs des revendications 1 à 6, **caractérisé en ce que** le catalyseur utilisé consiste en palladium sur charbon actif, platine sur charbon actif, chlorure de palladium-(II), acide hexachloroplatinique-(IV) hydraté et platine(0)-1,3-divinyl-1,1,3,3-tétraméthyldisiloxane.
